# EUROPEAN PATENT SPECIFICATION

(11) **EP 0 436 770 B1**
(45) Date of publication and mention of the grant of the patent: **09.11.1994**
(21) Application number: 90104290.3
(22) Date of filing: 06.03.1990
(51) Int. Cl.: F16K 3/18, F16K 51/02

(54) **Non-sliding gate valve for high vacuum use**
Nicht-gleitender Absperrschieber für Hochvakuum
Vanne à tiroir non glissant pour ultravide

(30) Priority: 08.01.1990 JP 424/90
(43) Date of publication of application: 17.07.1991
(73) Proprietor: IRIE KOKEN KABUSHIKI KAISHA, Tokyo (JP)
(72) Inventor: Sawa, Toshio, Sayama City Saitama Prefecture (JP); Irie, Norikimi, Setagaya-ku Tokyo (JP); Hayashi, Yuzo, Saitama Prefecture (JP); Katagiri, Toshiro, Sakado City Saitama Prefecture (JP)
(74) Representative: Beyer, Werner, Dipl.-Ing.

(56) References cited:
- EP-A- 0 309 181
- FR-A- 1 353 573
- FR-A- 2 283 375
- US-A- 4 681 329

## Description

The present invention relates to a gate valve and more particularly to a non-sliding gate valve for high vacuum use including a valve housing the inside of which can be held hermetically sealed from the outside, having an opening formed in one of its side walls, and a valve body disposed within said valve housing and adapted to sealingly cooperate with a valve seat formed around said opening, said valve comprising a mechanism for actuating said valve body to open or sealingly close said opening formed in said valve housing, said mechanism carrying out two subsequent movements, one to move said valve body in a direction substantially perpendicular to said valve seat, and the other to move said valve body substantially parallel to said valve seat with said valve body being spaced apart from said valve seat during said movement.

Gate valves of this type are suitable for use in a vacuum environment and are described e. g. in FR-A-2 283 375 and US-A-4,681,329. In both cases a valve body is positively guided by longitudinal guideways during its movement parallel to the valve seat and the driving force is transmitted from an actuating rod via a linkage with joints. The guideways and the linkage are arranged in the same valve chamber as the valve body, which chamber is subjected to the vacuum of the manufacturing vacuum environment. Because the movement of the valve body along the guideways and the pivotal movement in the joints of the linkage involve friction minute particles of different materials are produced as a result of the friction, deteriorating the degree of cleanliness in the vacuum environment. Further, since it is very difficult to provide an effective lubrication in a vacuum environment clogging may occur at the frictional parts in the course of continuous operation at high frequency.

Finally it has to be taken into account that further integration of semiconductors as well as the variety and complexity of their constituations have progressed so that the requirements for maintaining cleanliness in the manufacturing environment have become more stringent.

It is therefore an object of the present invention to provide a non-sliding gate valve of the type mentioned initially suitable for use in a vacuum environment where a high degree of cleanliness is required wherein those elements of the mechanism for actuating the valve body which are accompanied by friction in operation are all arranged outside the vacuum environment and the overall configuration of the mechanism is small.

In accordance with the present invention this object is achieved in that
- the valve body is connected to an actuating rod means extending through a passage formed in the housing,
- said passage of the housing is sealed with respect to said actuating rod means and allows translational and pivotal movement of the actuating rod means therethrough,
- the actuating mechanism is provided outside said valve housing, acts on the actuating rod means and is supported by support frame means mounted on the housing, and
- said support frame means enables translational and pivoting movement of the actuating rod means operated by said actuating mechanism.

### Brief Description of the Drawings

Fig. 1 shows an embodiment of a non-sliding gate valve in accordance with the present invention in state where its valve body is spaced apart from its valve seat with the left half being indicated in a front elevational view and the right half in a vertical sectional view;
Fig. 2 is a side elevational view of Fig. 1;
Fig. 3 is a sectional view taken along the line III-III in Fig. 1;
Fig. 4 is a sectional view taken along the line IV-IV in Fig. 1;
Fig. 5 is a view similar to Fig. 1, but indicating another embodiment of the present invention; and
Fig. 6 is a view similar to Fig. 2, but representing the embodiment shown in Fig. 5, partially in section along the line VI - VI in Fig. 5.

### Detailed Description of the Invention

In the drawings two embodiments of the present invention are represented wherein a non-sliding gate valve for use in a vacuum environment is embodied as a gate valve having a rectangular valve opening. Such a gate valve is in great demand at present for semiconductor wafer production lines, and it is also required to maintain a high degree of vacuum and simultaneously be capable of continuous operation at frequent intervals.

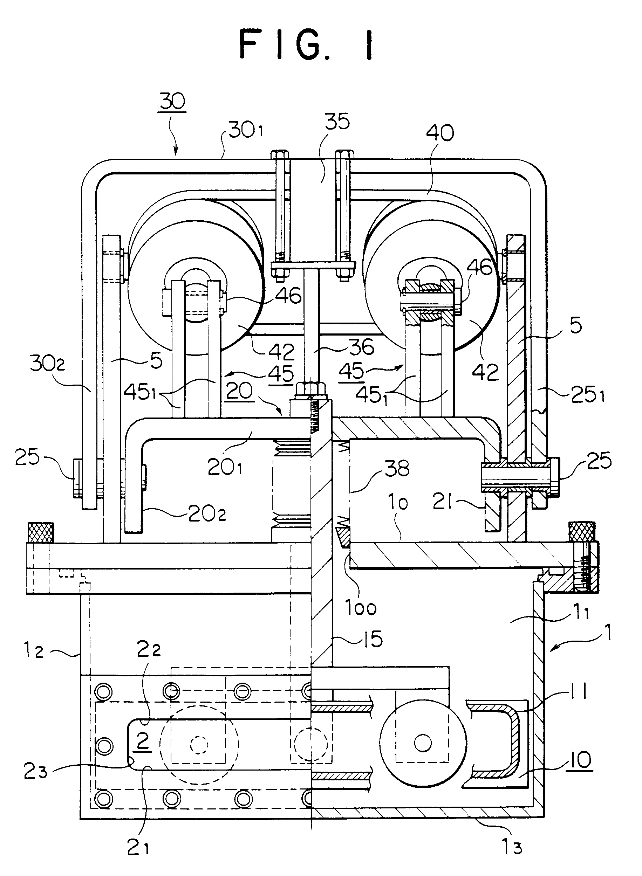

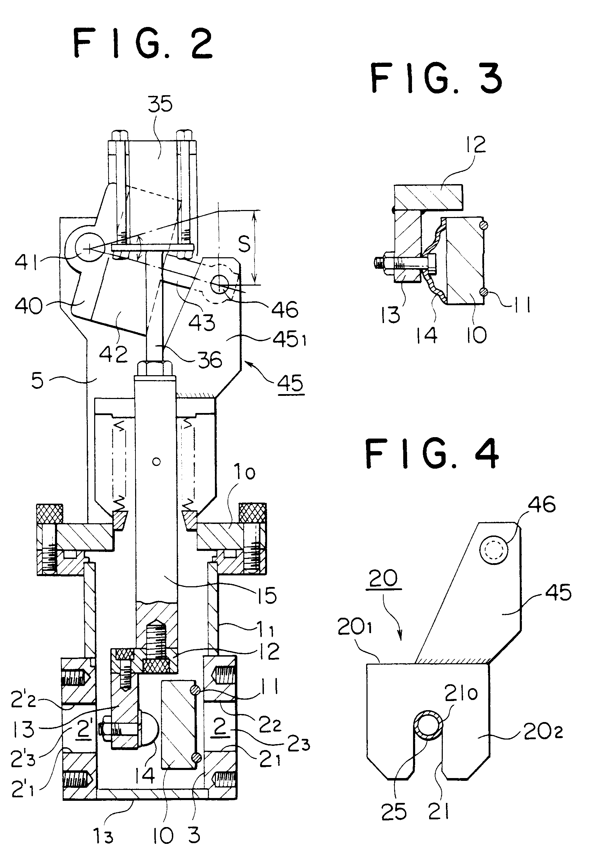

Referring now to Figs. 1 and 2 wherein a first embodiment of the gate valve in accordance with the present invention is indicated, a hollow box-like valve housing 1 having a rectangular cross section and which is hermetically sealed is provided the valve housing 1 comprising a top wall 1₀, two short and two long side walls 1₁ and 1₂, and bottom wall 1₃. In the drawings the bottom wall 1₃ is shown as being located horizontally, while the side walls 1₁, 1₂ are located vertically, the longer side walls 1₁ being depicted parallel with the plane of the drawings.

As shown in Fig. 1, one of the longer side walls 1₁ has a rectangular opening 2 formed at its lower portion such that the opening 2 is in symmetry with the vertical center line X-X of the valve housing 1 with its longer edges 2₁ and 2₂ being in parallel with the bottom wall 1₃ and shorter edges 2₃ being orthogonal thereto. A valve seat 3 is formed around the opening 2 as seen in Fig. 2. The remaining longer side wall 1₁ has a rectangular opening 2' formed at its lower portion so as to correspond to the opening 2 with the longer edges 2₁', 2₂' and the shorter edges 2₃' corresponding to the longer edges 2₁, 2₂ and shorter edges 2₃ of the opening 2, respectively. On the upper surface of the top wall 1₀ of the valve housing 1 a pair of substantially rectangular support columns 5 are secured at their lower ends in a spaced relationship so as to be in symmetry with the vertical center line X-X of the valve housing 1 and in parallel with its shorter side walls 1₂.

Arranged inside the valve housing 1 is a rectangular plate like valve body 10 having a plane configuration corresponding to that of the opening 2 so as to sealingly close it in association with the valve seat 3, one of the surfaces of the valve body 10 being substantially in parallel with the surface of the valve seat 3, with the valve body 10 having an O-ring 11 on the surface confronting the valve seat 3 so as to elastically abut against the valve seat 3 when actuated. In Fig. 2 the valve body 10 is shown in an open state positioned apart from the valve seat 3 so as to open opening 2 of the valve housing 1.

Also within the valve housing 1 is a rectangular plate like valve body support member 12 arranged so as to be in parallel with the longer or upper edge 2₂ of the opening 2 formed in the longer side wall 1₁ of the valve housing 1 and spaced apart from the side wall 1₁. The valve body support member 12 is located horizontally and in symmetry with the vertical center line X-X of the valve housing 1, and at each end thereof a rectangular plate like valve body mounting plate 13 is suspended so as to be in parallel with the valve seat 3 of the valve housing 1. Each of the valve body mounting plates 13 elastically maintain valve body 10 on their surfaces facing the valve seat 3 through a bellows 14 as a spring element so that the valve body 10 is positioned in symmetry with the vertical center line X-X of the valve housing 1 (See Fig. 3).

Further, the valve body support member 12 is secured on its upper surface to a lower end of a valve body actuating rod 15 having a circular cross section. The actuating rod 15 has a center line coinciding with the vertical center line X-X of the valve housing 1, and loosely passes vertically through an opening 1₀₀ formed in the center of the top wall 1₀ of the valve housing 1. The rod 15 is fixedly secured near its upper end to the center of a horizontal arm member 20₁ of an inner swing frame 20 which comprises the horizontal arm member 20₁ and a pair of vertical leg members 20₂ respectively depended from each end of the horizontal arm member 20₁ so as to lie inside, spaced apart from and in parallel to the support columns 5, respectively. Thus the inner swing frame 20 has substantially an inverted U-shaped configuration when viewed in an elevational view. The vertical leg members 20₂ each have an inverted U-shaped slot 21 formed at the lower portions thereof, the vertical center lines of the slots 21 lying in a vertical plane containing the vertical center line X-X of the valve housing 1 and in parallel with the longer side walls 1₁ thereof. The semicircular top 21₀ of the slots 21 are swingably supported on the support columns 5, respectively, by pins 25 secured at the lower portions of the columns 5, respectively, the pins 25 having the same diameter as that of the tops 21₀ of the slots 21, with the axes of the pins 25 being on a line parallel with the longer side walls 1₁ of the valve housing 1 (See Fig. 4).

Arranged outside of and substantially surrounding the support columns 5 is an outer swing frame 30 which comprises a horizontal arm member 30₁ and a pair of vertical leg members 30₂ each depended from each end of the horizontal arm member 30₁ so as to be respectively spaced an identical distance from the support columns 5. Thus the outer swing frame 30 has substantially an inverted U-shaped configuration when viewed in an elevational view, the vertical leg members 30₂ being respectively swingably mounted to the the respective pins 25 which are secured to the support columns 5, respectively.

Further, on a lower surface of the horizontal arm member 30₁ of the outer swing frame 30 an air cylinder 35 is vertically secured by its cylinder end, the center axis of the cylinder 35 coinciding with the vertical center axis of the valve housing 1, and its piston rod 36 is secured at its lower end to the upper end of the valve body actuating rod 15 which is secured at its upper portion to the horizontal arm member 20₁ of the inner swing frame 20. Disposed between the inner periphery of the opening 1₀₀ formed in the top wall 1₀ of the valve housing 1 and the under surface of the horizontal arm member 20₁ of the inner swing frame 20 is a bellows 38 as a seal element loosely surrounding the valve body actuating rod 15. The respective ends of the bellows 35 are sealingly secured to the inner periphery of the opening 1₀₀ and the horizontal arm member 20₁, respectively, so that the inside of the valve housing 1 is maintained air tight.

Disposed between the support columns 5 near their upper end portions is a substantially elliptical plate-like air cylinder support plate 40 swingably supported thereto by air cylinder rotating shafts 41, respectively, the center lines of which lie in an identical horizontal line. A pair of air cylinders 42 are secured at their cylinder ends to the air cylinder support plate 40 orthogonally thereto and arranged respectively at each side of the air cylinder 35. The piston rods 43 of the air cylinders 42 are respectively swingably connected at their free ends near the upper portions of piston rod support members 45 by pins 46, respectively, and the piston rod support members 45 are arranged in symmetry with the vertical center line X-X of the valve housing 1 and comprise, respectively a pair of substantially rectangular plates 45₁ secured at their lower ends to the upper surface of the horizontal arm member 20₁ of the inner swing frame 20.

The following is an explanation of the operation of the first embodiment of the gate valve in accordance with the present invention having a constitution as explained above and as shown in the drawings.

First, Figs. 1 and 2 indicate the gate valve after completing the first stage of opening or beginning the second stage of closing the valve body 10 wherein the valve body 10 is kept apart from the valve seat 3 so as to communicate the openings 2, 2' formed in the valve housing 1 with each other. In this state the valve body 10 is spaced apart from the valve seat 3 and lies opposite thereto, and the piston rods 36 and 43 of air cylinders 35 and 42, respectively, are all at maximum stroke. However,at the second stage of opening, upon actuation of the air cylinder 35 to retract its piston rod 36 upwards as viewed in Figs. 1 and 2 by a stroke 5, the valve body actuating rod 15 secured to this piston rod 35 through the inner swing frame 20 causes the valve body 10 to be raised upwards through the valve body support member 12, valve body mounting plates 13, and bellows 14 so that the the valve body 10 is raised to a position where it does not interfere with the openings 2, 2' of the valve housing 1, bringing the valve body 10 into a completely open position. In this case, the inner swing frame 20 integral with the valve body actuating rod 15 is raised upwards with the slots 21 formed in its vertical legs 20₂ being guided by the pins 25, respectively, and simultaneously the air cylinders 42 having their piston rods 43 connected to the piston rod support members 45 through the pins 46, respectively, cause the air cylinder support plate 40 which mounts the air cylinders 42 to be rotated relative to the support columns 5 through the air cylinder rotating shafts 41, respectively.

Inversely, in order to operate the valve body 10 from this perfect open state to close the valve seat 3 for the purpose of preventing mutual communication between the openings 2 and 2' formed in the valve housing 1 the valve body 10 is first brought into the state as shown in Figs. 1 and 2 by the actuation of the air cylinder 35 through its piston rod 36, valve body actuating rod 15, valve body support member 12, valve body mounting plate 13, and bellows 14. In this first state, the piston rod 36 of the air cylinder 35 is at the end of its elongation stroke, the bottoms 21₀ of the slots 21 respectively formed in the vertical leg members 20₂ of the inner swing frame 20 lie on the pins 25, respectively, and the piston rods 43 of the air cylinders 42 are at the ends of their elongating strokes. At this point, as the second stage of closing, upon actuation of the air cylinders 42 to retract their piston rods 43, the piston rods 43 cause the inner swing frame 20 to rotate through the piston rod support members 45 in a counterclockwise direction as viewed in Fig. 2. Therefore, the valve body 10 which has been in the state shown in Figs. 1 and 2 is urged against the valve seat 3, strongly pressing the 0-ring 11 mounted to the valve body 10 upon the valve sear 3, forming perfect seal between the valve body 10 and the valve seat 3 to completely block the communication between the openings 2, 2' formed in the valve housing.

Inversely, in order to operate the valve body 10 to open the valve seat 3 which is closed by the valve body 10, the air cylinders 42 are first actuated so that their piston rods 43 are extended to their maximum strokes to bring them into the sate shown in Figs. 1 and 2. Thereafter, as the second stage of opening the air cylinder 35 is actuated to retract its piston rod 36 so that the valve body 10 is raised vertically.

As mentioned above, in the first embodiment of the gate valve in accordance with the present invention, in order to open or close the openings 2, 2' formed in the valve housing 1 for the purpose of establishing or ceasing the communication between them. it is necessary for two kinds of movements to be imparted to the valve body 10. That is, one is the movement to move the valve body 10 from or to the position where it is opposite the openings 2, 2' as shown in Fig. 2, and the other is the movement to raise or lower the valve body 10 from or to this position where the valve body 10 is perfectly separated from the openings 2, 2'. These movements are both carried out by a valve body opening-closing mechanism located outside the valve housing 1, i.e. comprising the inner and outer swing frames 20 and 30, air cylinders 35 and 42, and elements connecting the above members with each other. Also, during these movements no relative frictional movement occurs between the valve body 10 and valve seat 3 within the valve housing 1. Therefore, the inside of the valve housing 1 can always be kept clean.

Further, among these movements, the movement to raise or lower the valve body 10 calls for a force equal to, in the case where the inside of the valve housing 1 is a vacuum, the sum of the force at the side that the valve body 10 is drawn into the valve housing 1 determined by the effective diameter of the bellows 38 for sealing and the pressure difference between the outside and inside of the valve housing 1, and the weights of the valve body 10 as well as the valve body actuating rod 15, and the sum is added or subtracted by the spring reactive force of the bellows 38. In the case where the inside of the valve housing 1 is atmospheric, the force is reduced by an appropriate degree, but, since at any rate such force is relatively small, the inner diameter of the air cylinder 35 for holding the valve body 10 at a definite position or moving can be relatively small.

Moreover, among the movements for opening or closing the valve body 10, the movement to move it upwards or downwards has an upwards or downwards stroke which is determined by the dimension of the openings 2, 2' formed in the valve housing 1 in the vertical direction, that is, the dimension corresponding to the shorter edge 2₂ of the rectangular openings 2, 2'. In general, this stroke is not too large when the upwards or downwards stroke coincides with the direction of the shorter edge 2₂ of the rectangular opening 2 as in the embodiment shown.

Next, among the movements of the valve body 10, in the one to urge the valve body against the valve seat 3, since the 0-ring 11 as a seal packing must be pressed to deformation for keeping a perfectly airtightseal, the air cylinders 42 must have a driving force comparatively larger than that of the first-mentioned movement although their strokes can be small. In a gate valve having rectangular openings as in the embodiment shown, since the force is on the order of 200 kg for a small size valve, or 700 to 800 kg for a larger one, air cylinders 42 havings a larger inner diameter and a shorter stroke are required.

In the above embodiment the valve seat 3 is indicated as being vertical, but if it is shaped so as to have a slight inclination relative to the vertical plane, at the time of closing the valve body 10, the 0-ring 11 will abut against the valve seat 3 in a slightly inclined state so that the seal condition can be made more reliable.

The opening or closing movement between the valve body 10 and the valve seat 3 or the up and down movement of the valve body 10 is carried out by the air cylinders 42 or 35 therefore, with either both sides of their pistons being adapted to be pressurized or released under the use of a restoring spring.

Further, although the above embodiment has been explained for a vertically arranged valve housing it is also possible that the various actuating mechanisms may be arranged upsidedown in conjunction with the embodiment shown for convenience in laying out the manufacturing line for the production of semiconductor wafers or for convenience in handling. In this case expressions above such as up and down used for the embodiment shown may be reversed, but there is no difference in fundamental operation. However, among the vertical loads applied to the valve body actuating rod 15, the relationship between the load due to the pressure difference between the inside and outside of the valve housing 1 and the weights of the valve body 10 and the valve body actuating rod 15 is not a sum, but rather a difference instead. Nevertheless, it is small in magnitude with no significant difference occurring to influence the fundamental constitution, and it is generally possible to manage with an identical design.

In order to mount the valve body 10 to the valve body mounting plate 13 the bellows 14 is used between them as a spring means. This constitution is aimed at equalizing the force pressing the O-ring 11 mounted to the valve body 10 on the valve seat 3 over the whole length of the O-ring 11, and it is necessary in a gate valve having rectangular openings as in the embodiment shown in order that the force applied centrally to the valve body mounting plate 12 is distributed uniformly along the length of the opening 2. In this case it is also necessary to take into consideration the uniform distribution of force in the vertical direction of the opening 2, because, if there is unevenness in the contact condition between the O-ring 11 and the valve seat 3 it is necessary for the O-ring 11 to deform to assure a sufficient airtight state even at lower contact pressure portion. However, if there is unnecessary deformation at the larger contact pressure portions of the O-ring 11 such portions will not only have a tendency to wear, but unnecessarily large compression forces will be required as a whole.

Results of experiments comparing this embodiment with a conventional gate valve confirmed that in the former the compression force necessary to maintain the O-ring 11 in a uniform contact condition is reduced by about 50% compared with the latter. Such results allow the gate valve in accordance with the present invention to have reduced dimensions in the actuating mechanisms and the air cylinders and the wear of the O-ring 11 to be suppressed.

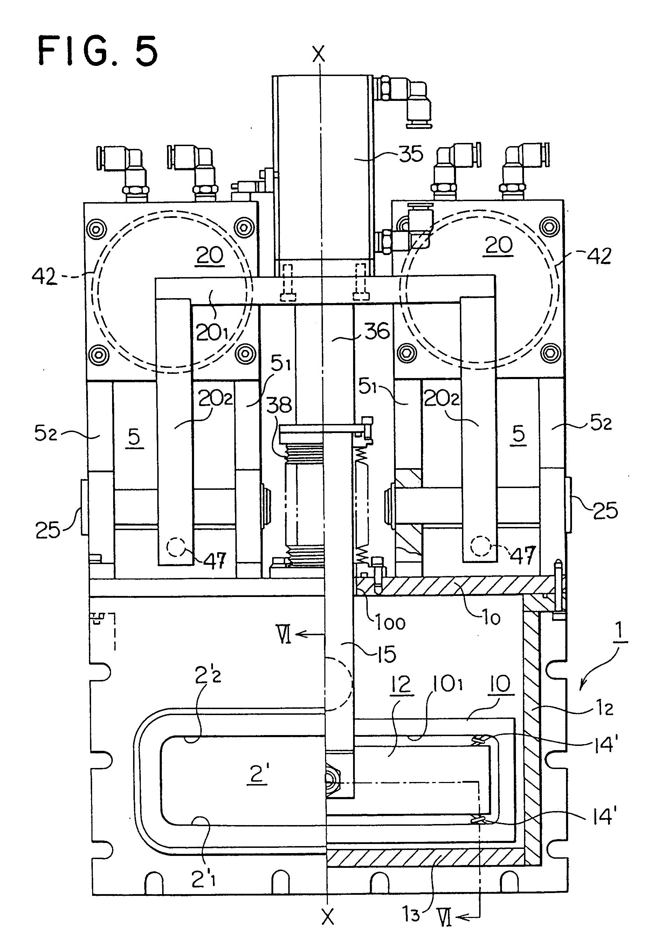

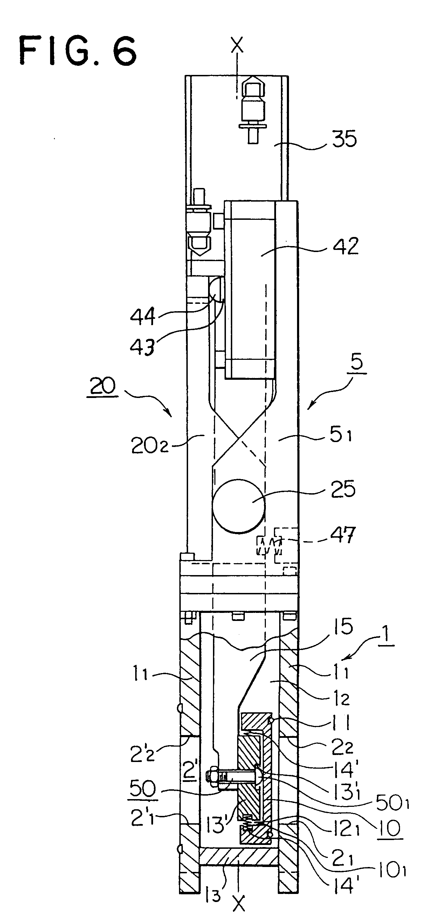

Next the second embodiment of the present invention will be explained in reference to Figs. 5 and 6 wherein those elements that are the same as or similar to those in the first embodiment explained above bear the same reference numbers.

This embodiment has substantially the same valve housing 1 as that of the first embodiment and comprises a top wall 1₀, longer and shorter side walls 1₁, 1₂, and bottom wall 1₃. As shown in Fig. 5 one of the longer side walls 1₁ has formed in its lower portion a rectangular opening 2 in symmetry with the vertical center line X-X of the valve housing 1 with its longer edges 2₁ and 2₂ being in parallel with the bottom wall 1₃ of the valve housing 1, and its shorter edges 2₃ orthogonal thereto, a valve seat 3 being formed around the opening 2 (See Fig. 6). The other of the longer side walls 1₁ of the valve housing 1 has formed in its lower portion a rectangular opening 2' so as to correspond to the opening 2 with its longer edges 2₁', 2₂' and shorter edges 2₃' corresponding with the longer edges 2₁, 2₂, and shorter edges 2₃ of the opening 2, respectively. Arranged on the upper surface of the top wall 1₀ of the valve housing 1 are a pair of vertical support columns 5 in symmetry with the vertical center line X-X of the valve housing 1, each of the support columns 5 comprising a pair of plate-like substantially rectangular support plates 5₁ and 5₂ spaced a small distance apart from each other, each of the plates 5₁ and 5₂ having at their upper portions a narrow pilaster-like part and secured at their lower ends to the top wall 1₀ of the upper surface of the valve housing 1 so as to be in parallel with its shorter side walls 1₂.

A plate-like rectangular valve body 10 having a plane configuration somewhat larger than that of the opening 2 formed in the valve housing 1 is arranged within the housing 1 such that one of the surfaces of the valve body 10 is substantially in parallel with the valve seat 3 and is capable of opening or closing the opening 2 in association with the valve seat 3. Mounted on the surface of the valve body 10 opposite the valve seat 3 is an O-ring 11 adapted to abut against the valve seat 3 (See Fig. 6). In the drawings the valve body 10 is shown in a state of opening the opening 2 with the valve body 10 being spaced apart from the valve seat 3 of the valve housing 1. As apparent from Figs. 5 and 6 a depression 10₁ having substantial depth is formed in the surface of the valve body 10 remote from the valve seat 3, the depression 10₁ having a plane configuration similar to that of the valve body 10, but of somewhat smaller dimensions. Disposed within the depression 10₁ is a plate-like substantially rectangular valve body pressing member 13' which has a plane configuration similar to that of the depression 10₁, but somewhat smaller in dimensions than that of the depression 10₁ and has a substantial thickness with its outer periphery being spaced from the inner periphery of the depression 10₁ by a small amount and its bottom being similarly spaced apart from the bottom of the depression 10₁ by a small amount. In the bottom of the valve body pressing member 13' a central circular cavity 13₁' having a substantial depth is formed, and a bolt 50 having a semi-spherical head 0₁ has its stem introduced into the cavity 13₁' to pierce through the center of the valve body pressing member 13' such that the apex of the head 50₁ of the bolt 50 abuts against the bottom of the depression 10₁. The valve body 10 and the valve body pressing member 13' are elastically connected to each other by connecting the inner periphery of the depression 10₁ of the valve body 10 and the outer periphery of valve body pressing member 13' by means of several coil springs 14' as elastic means.

A valve body actuating rod 15 having its central axis lying in the vertical center line X-X of the valve housing 1 is introduced from the outside into the valve housing 1 by being loosely passed through a cylindrical opening 1₀₀ formed in the top wall 1₀ of the valve housing 1 and the lower end of the valve actuating rod 15 is centrally secured to the valve body pressing member 13' at its back surface by the bolt 50 and a nut. The valve body actuating rod 15 passed through the opening 1₀₀ formed in the top wall 1₀ of the valve housing 1 is adapted near its upper end portion to loosely pass through a cylindrical opening formed in the middle of a horizontal arm member 20₁ of a swing frame 20. The swing frame 20 comprises the horizontal arm member 20₁ and a pair of vertical leg members 20₂ each vertically depending from either end of the arm member 20₁, the vertical leg members 20₂ being respectively positioned centrally between the support plates 5₁ and 5₂ constituting the respective support columns 5 and in parallel thereto. Thus the swing frame 20 has substantially an inverted U-shaped configuration when viewed in an elevational view. The vertical leg members 20₂ of the swing frame 20 are spaced at their lower ends from the upper surface of the top wall 1₀ of the valve housing 1 and swingably connected to the pair of rectangular support plate 5₁ and 5₂ at their lower portions, respectively, by having pins 25 loosely passed therethrough, respectively, which are mounted to the rectangular support plates 5₁ and 5₂ so as to be in parallel with the top wall 1₀ of the valve housing 1.

Centrally secured on the upper surface of the horizontal arm member 20₁ of the swing frame 20 is an air cylinder 35, vertically attached so that the bottom of the cylinder faces upwards and so as to have its central axis coincide with the vertical center line X-X of the valve housing 1, its piston rod 36 being secured to the upper end of the valve body actuating rod 15. In order to maintain the gap formed between the cylindrical opening 1₀₀ formed in the top wall 1₀ of the valve housing 1 and the valve body actuating rod 15 in an airtight condition relative to the valve housing 1, a bellows 38 is arranged between the outside of the top wall 1₀ of the valve housing 1 and the valve body actuating rod 15 so as to loosely surround the latter, each end of the bellows 38 being sealingly secured to the top wall 1₀ and the valve body actuating rod 15 respectively.

A pair of air cylinders 42 are secured at their cylinder ends to the support columns 5, respectively, near their upper ends in an identical horizontal line, and their piston rods 43 pass centrally through the other ends of the cylinders 42, respectively, pressing members 44 each having a semi-spherical configuration are connected to the free end of the piston rods 43, and the tops of the pressing members 44 are adapted to abut against the swing frame 20 at the intersecting portions of the center lines of the horizontal arm member 20₁ and vertical leg members 20₂ of the swing frame 20, respectively.

Now the operation of the second embodiment having such a constitution as described above will be explained as follows.

Figs. 5 and 6 show the state of the valve body 10 spaced apart from the valve seat 3 after completing the first stage of opening or beginning the second stage of closing the opening 2. In this state, the valve body 10 is spaced apart from the valve seat 3 and lies opposite thereto. Further, in this state, the piston rod 36 of the air cylinder 35 and the piston rods 43 of the air cylinders 42 are respectively at maximum extended stroke and maximum retracted strokes, respectively. From this state, as the second stage of opening, upon actuation of the air cylinder 35 to retract its piston rod 36 to raise it upwards as viewed in the drawing, the piston rod 36 causes the valve body actuating rod 15 secured thereto to raise the valve body 10 upwards through the valve body pressing member 13' and coil springs 14' to a position where the valve body 10 does not interfere with the openings 2, 2' of the valve housing 1, revealing a completely open state of the valve body.

Inversely, in order to operate the valve body 10, which is in a completely open state, to prevent the communication of the openings 2, 2' formed in the valve housing 1 with each other, first the air cylinder 35 is actuated so as to bring the valve body 10 into the state shown in Figs. 5 and 6 through the piston rod 36 of the air cylinder 35 and the valve body actuating rod 15, valve body pressing member 13' and coil springs 14'. In this state, the piston rod 36 of the air cylinder 35 is at its maximum extended stroke, and the outer edges of the vertical leg members 20₂ of the swing frame 20 are substantially in parallel with the vertical plane passing through the centers of the pins 25 which are mounted to the rectangular support plates 5₁ and 5₂ constituting the support columns 5, respectively, and the piston rods 43 of the air cylinders 42 are at their retracted strokes.

At this point, as the second stage of closing, upon actuation of the air cylinders 42 to move their piston rods 43 towards the ends of their maximum extended strokes, the respective piston rods 43 push the intersecting points of the horizontal arm member 20₁ and the vertical leg members 20₂ constituting the swing frame 20 through the pressing members 44 so that the swing frame 20 is caused to be rotated counter clockwise as viewed in Fig. 6 about the pins 25. Accordingly, the horizontal arm member 20₁ of the swing frame 20 causes the valve body actuating rod 15 which is connected to the piston rod 36 of the air cylinder 35 secured to the horizontal arm member 20₁ to rotate counter clockwise as viewed in Fig. 6 together with the air cylinder 35, resulting in the valve body pressing member 13' which is centrally secured to the lower end of the valve body actuating rod 15 pressing the the bottom of the depression 10₁ formed in the valve body 10 by the apex of the semi-spherical head 50₁, of the bolt 50 which connects the valve body actuating rod 15 to the valve body pressing member 13'. Therefore, the valve body 10 is urged against the valve seat 3 so that the O-ring 11 mounted to the valve body 10 is pressed on the valve seat 3 by strong force, carrying out a perfect sealing action between the valve body 10 and the valve seat 3 to perfectly prevent the mutual communication between the openings 2 and 2' formed in the valve housing 1. In this case, since the valve body 10 is connected to the valve body pressing member 13' through several coil spring 14' the force on the valve seat 3 is uniformly distributed over the contact surfaces between the valve seat 3 and the valve body 10.

Inversely, in order to separate the valve body 10 from the valve seat 3 the air cylinders 42 are first actuated to retract their piston rods 43 to rotate the swing frame 20 about the pins 25 in the clockwise direction as viewed in Fig. 6 by the action of restoring coil springs 47, which are disposed between the leg members 20₂ of the swing frame 20 and the top wall 1₀ of the valve housing 1 by any suitable means, to arrive at the state shown in Figs. 5 and 6. Therefore, the air cylinder 35 integral with the horizontal arm member 20₁ of the swing frame 20, and thus the valve body actuating rod 15 connected to its piston rod 36 is made to assume the state as shown in these drawings, separating the valve body 10 from the valve seat 3. Thereafter, as the second stage of opening the air cylinder 35 is actuated to retract its piston rod 36 so that the valve body 10 is moved vertically upwards.

Thus, in the gate valve in accordance with the second embodiment, in order to effect a communication or a block between the openings 2 and 2' two kinds of movements must be imparted for the openings or closing of the opening 2. That is, one of the movements is to move the valve body 10 from a position closing the opening 2 to a position where as shown in Fig. 6 the valve body 10 is positioned opposite the opening 2 and spaced apart therefrom, or to move it from the position shown in Fig. 6 to a position where the valve body 10 closes the opening 2, while the other of the movements is to move the valve body 10 from the position shown in Fig. 6 upwards to a position where the valve body 10 allows perfect communication between the openings 2 and 2', or to move the valve body 10 downwards from this position to the position shown in Fig. 6 where the valve body 10 is aligned with the openings 2 and 2'. These movements are all carried out by the mechanism provided outside the valve housing 1, i.e. various elements such as the swing frame 20, air cylinder 35 and air cylinders 42. Further, during these movements there is no relative frictional movement between the valve body 10 and the valve seat 3 within the valve housing 1, the inside thereof being always maintained in a clean condition.

Also, in this embodiment the force necessary for the two movements of the valve body 10 is identical to that in the first embodiment.

The principal differences in constitution between the first and second embodiments reside in that in the latter only one single swing frame is necessary for effecting the two movements in contrast with the former in which two swing frames, i.e. inner and outer swing frames are required, and that in the latter the valve body is connected to the valve body pressing member through several sets of coil springs and the valve body pressing member is connected to the valve body actuating rod, whereas in the former the valve body is mounted to the valve body mounting plates through a pair of bellows and the valve body mounting plates are connected to the valve body actuating rod.

With these differences in constitution the second embodiment is superior to the first one in the points that the overall dimensions of the former are considerably smaller than the latter, and the pressing force of the valve body on the valve seat is more uniformly distributed over the valve seat than in the latter.

Although in the above the present invention has been exemplified and shown as having rectangular openings in the valve housing, with relatively longer edges in the horizontal direction as mostly used in transfer systems for manufacturing semiconductor wafers, the gate valve in accordance with the present invention may, of course, be applicable to those gate valves having openings of circular configuration, etc. and also to gate valves for vacuum apparatuses such as accelerators.

It is to be understood that although certain forms of the present invention have been illustrated and described, it is not intended to be limited thereto except insofar as such limitations are included in the following claims.

## Claims

1. A non-sliding vacuum gate valve including a valve housing (1) the inside of which can be held hermetically sealed from the outside, having an opening (2) formed in one of its side walls (1₁), and a valve body (10) disposed within said valve housing (1) and adapted to sealingly cooperate with a valve seat (3) formed around said opening (2), said valve comprising a mechanism (20, 35, 36, 40 - 45) for actuating said valve body (10) to open or sealingly close said opening (2) formed in said valve housing (1), said mechanism (20, 35, 36, 40 - 45) carrying out two subsequent movements, one to move said valve body (10) in a direction substantially perpendicular to said valve seat (3), and the other to move said valve body (10) substantially parallel to said valve seat (3) with said valve body (10) being spaced apart from said valve seat during said movement, **characterized in that**
- the valve body (10) is connected to an actuating rod means (15) extending through a passage (1₀₀) formed in the housing (1),
- said passage (1₀₀) of the housing (1) is sealed with respect to said actuating rod means (15) and allows translational and pivotal movement of the actuating rod means (15) therethrough,
- the actuating mechanism (20, 35, 36, 40 - 45) is provided outside said valve housing (1), acts on the actuating rod means (15) and is supported by support frame means (5, 25) mounted on the housing (1), and
- said support frame means (5, 25) enables translational and pivoting movement of the actuating rod (15) means operated by said actuating mechanism (20, 35, 36, 40 - 45).

2. A non-sliding vacuum gate valve as claimed in claim 1, **characterized in that**
- said actuating rod means (15) extends in a direction substantially parallel to said valve seat (3),
- a pair of spaced plate-like support column means (5) is secured to an outside portion of said valve housing (1) and extends in parallel with the longitudinal direction of said actuating rod means (15),
- an outer swing frame means (30) is disposed outside of and surrounds said support column means (5) and comprises a pair of leg members (30₂) extending parallel to the longitudinal direction of said actuating rod means (15) and an arm member (30₁) extending perpendicular to the longitudinal direction of said actuating rod means (15),
- said leg members (30₂) are pivoted on said support column means (5) and connected by said arm member (30₁) at each end thereof,
- an inner swing frame means (20) having a similar constitution as said outer swing frame means (30) is disposed between said support column means (5),
- a pair of pins (25) is pivotally connecting said leg members (30₂, 20₂) of said outer and inner swing frame means (30, 20) to said support column means (5),
- a fluid cylinder means (35, 36) is connecting said arm members (30₁, 20₁) of said outer and inner swing frames (30, 20),
- a fluid cylinder support plate means (40) is swingably connected to said support column means (5) by fluid cylinder bearing shafts (41) which are disposed orthogonally to the longitudinal direction of said actuating rod means (15),
- a pair of fluid cylinder means (42) is secured to said fluid cylinder support plate (40) with their piston rods (43) being swingably connected to said arm member (20₁) of said inner swing frame means (20),
- said inner swing frame means (20) is supported on said support column means (5) by said pin means (25) in such way that said leg members (20₂) are shiftable in said longitudinal direction of said actuating rod means (15) in addition to said swing movement around said pin means (25),
- and said arm member (20₁) of said inner swing frame means (20) is connected to said actuating rod means (15).

3. A non-sliding vacuum gate valve as claimed in claim 2, **characterized in that** as a sealing element a bellows means (38) is diposed between said arm member (20₁) of said inner swing frame means (20) and the portion (1₀₀) of said valve housing (1) where said actuating rod means (15) passes therethrough, the ends of said bellows means (38) being hermetically secured to said arm member (20₁) and said portion (1₀₀), respectively.

4. A non-sliding vacuum gate valve as claimed in claim 1, **characterized in that**
- said actuating rod means (15) extends in a direction substantially parallel to said valve seat (3),
- a swing frame means (20) is disposed outside said valve housing (1) and comprises a horizontal arm member (20₁) connecting said actuating rod means (15) and a pair of leg members (20₂) each vertically suspended from an end of said arm member (20₁),
- a fluid cylinder means (35, 36) is secured to said arm member (20₁) of said swing frame means (20) so as to have a central axis coinciding with the center line of said actuating rod means (15) with its piston rod (36) being connected thereto,
- a pair of support column means (5) is secured to said valve housing (1) and extends in parallel with the longitudinal direction of said actuating rod means (15),
- a pair of fluid cylinders (42) are each secured to said support column means (5) and arranged so as to push the respective ends of said horizontal arm member (20₁) of said swing frame means (20),
- and pin means (25) are swingably connecting the lower portions of said leg members (20₂) of said swing frame means (20) to said support column means (5).

5. A non-sliding vacuum gate valve as claimed in claim 4, **characterized in that** said valve body (10) is resiliently connected to a valve body pressing member (13') secured centrally to the lower end of said actuating rod means (15), and said valve body pressing member (13') is adapted to press against said valve body (10) at substantially its center portion.

6. A non-sliding vacuum gate valve as claimed in claim 5, **characterized in that** said valve body (10) is resiliently connected to said valve body pressing member (13') by means of a set of coil springs (14') disposed between said valve body (10) and said valve body pressing member (13').

## Patentansprüche

1. Nicht-gleitender Absperrschieber für Vakuum mit einem Ventilgehäuse (1), dessen Innenseite gegen die Außenseite hermetisch abzudichten ist und das in einer seiner Seitenwände (1₁) mit einer Öffnung (2) ausgebildet ist, einem im Ventilgehäuse (1) angeordneten Ventilkörper (10), der mit einem die Öffnung (2) umgebenden Ventilsitz (3) dichtend zusammenwirkt, und mit einem Betätigungsmechanismus (20, 35, 36, 40 - 45) zum Öffnen oder dicht Schließen der in dem Ventilgehäuse (1) ausgebildeten Öffnung (2), der zwei aufeinander folgende Bewegungen ausführt, nämlich eine, um den Ventilkörper (10) im wesentlichen senkrecht zu dem Ventilsitz (3) zu bewegen, und die andere, um den Ventilkörper (10) mit Zwischenabstand zum Ventilsitz (3) im wesentlichen parallel zu diesem zu bewegen, **dadurch gekennzeichnet**, daß
- der Ventilkörper (10) mit einer sich durch einen Durchlaß (1₀₀) im Gehäuse (1) erstreckenden Betätigungsstange (15) verbunden ist,
- der Durchlaß (1₀₀) des Gehäuses (1) gegen die Betätigungsstange (15) abgedichtet ist und eine Translationsbewegung sowie eine Schwenkbewegung der Betätigungsstange (15) zuläßt,
- der Betätigungsmechanismus (20, 35, 36, 40 - 45) auf der Außenseite des Ventilgehäuses (1) angebracht ist, auf die Betätigungsstange (15) wirkt und an einem am Gehäuse (1) montierten Tragrahmen (5, 25) gelagert ist, und
- der Tragrahmen (5, 25) Translationsbewegungen und Schwenkbewegungen der vom Betätigungsmechanismus (20, 35, 36, 40 - 45) angetriebenen Betätigungsstange (15) zuläßt.

2. Nicht-gleitender Absperrschieber für Vakuum nach Anspruch 1, **dadurch gekennzeichnet**, daß
- sich die Betätigungsstange (15) im wesentlichen in Richtung parallel zu dem Ventilsitz (3) erstreckt,
- ein Paar mit Zwischenabstand angeordnete, plattenartige Stützen (5) auf einem äußeren Bereich des Ventilgehäuses (1) befestigt ist und sich parallel zur Längsrichtung der Betätigungsstange (15) erstreckt,
- ein äußerer Schwenkrahmen (30) außerhalb der Stützen (5) angeordnet ist, diese umgibt und ein Paar Schenkel (30₂), die sich parallel zur Längsrichtung der Betätigungsstange (15) erstrecken, sowie einen sich senkrecht zur Längsrichtung der Betätigungsstange (15) erstreckenden Steg (30₁) aufweist,
- die Schenkel (30₂) an den Stützen (5) schwenkbar gelagert und mit den Enden des Stegs (30₁) verbunden sind,
- ein innerer Schwenkrahmen (20), der einen ähnlichen Aufbau hat wie der äußere Schwenkrahmen (30), zwischen den Stützen (5) angeordnet ist,
- ein Paar Bolzen (25) die Schenkel (30₂, 20₂) des äußeren und des inneren Schwenkrahmens (30, 20) mit den Stützen (5) verbindet,
- ein Fluidzylinder (35, 36), die Stege (30₁, 20₁) des äußeren und des inneren Schwenkrahmens (30, 20) verbindet,
- eine Fluidzylinder-Tragplatte (40) durch senkrecht zur Längsrichtung der Betätigungsstange (15) angeordnete Fluidzylinder-Lagerbolzen (41) schwenkbar mit den Stützen (5) verbunden ist,
- an der Fluidzylinder-Tragplatte (40) ein Paar Fluidzylinder (42) befestigt ist, deren Kolbenstangen (43) schwenkbar mit dem Steg (20₁) des inneren Schwenkrahmens (20) verbunden sind,
- der innere Schwenkrahmen (20) durch die Bolzen (25) in der Weise an den Stützen (5) gelagert ist, daß die Schenkel (20₂) zusätzlich zu der Schwenkbewegung um die Bolzen (25) in Längsrichtung der Betätigungsstange (15) verschieblich sind,
- und der Steg (20₁) des inneren Schwenkrahmens (20) mit der Betätigungsstange (15) verbunden ist.

3. Nicht-gleitender Absperrschieber für Vakuum nach Anspruch 2, **dadurch gekennzeichnet**, daß als Dichtungselement ein Balg (38) zwischen dem Steg (20₁) des inneren Schwenkrahmens (20) und dem Teil (1₀₀) des Ventilgehäuses (1), wo die Betätigungsstange (15) durchgeführt ist, angeordnet ist, wobei die Enden des Balgs (38) hermetisch dicht an dem Steg (20₁) bzw. dem Gehäuseteil (1₀₀) befestigt sind.

4. Nicht-gleitender Absperrschieber für Vakuum nach Anspruch 1, **dadurch gekennzeichnet**, daß
- sich die Betätigungsstange (15) im wesentlichen parallel zum Ventilsitz (3) erstreckt,
- ein Schwenkrahmen (20) außerhalb des Ventilgehäuses (1) angeordnet ist und einen horizontalen Steg (20₁) aufweist, der die Betätigungsstange (15) und ein Paar Schenkel (20₂) verbindet, die sich jeweils senkrecht zu einem Ende des Stegs (20₁) erstrecken,
- ein Fluidzylinder (35, 36) derart an dem Steg (20₁) des Schwenkrahmens (20) befestigt ist, daß die Mittelachse mit der Mittelachse der mit der Kolbenstange (36) verbundenen Betätigungsstange (15) fluchtet,
- ein Paar Stützen (5) an dem Ventilgehäuse (1) befestigt ist und sich parallel zur Längsrichtung der Betätigungsstange erstreckt,
- ein Paar Fluidzylinder (42) an Stützen (5) befestigt und derart angebracht ist, daß sie gegen die Enden des horizontalen Stegs (20₁) des Schwenkrahmens (20) drücken,
- und Bolzen (25) die unteren Bereiche der Schenkel (20₂) des Schwenkrahmens (20) schwenkbar mit den Stützen (5) verbinden.

5. Nicht-gleitender Absperrschieber für Vakuum nach Anspruch 4, **dadurch gekennzeichnet**, daß der Ventilkörper (10) nachgiebig mit einem Ventilkörper-Andruckglied (13') verbunden ist, welches mittig am unteren Ende der Betätigungsstange (15) befestigt und im wesentlichen gegen den mittleren Bereich des Ventilkörpers (10) andrückbar ist.

6. Nicht-gleitender Absperrschieber für Vakuum nach Anspruch 5, **dadurch gekennzeichnet**, daß der Ventilkörper (10) mittels eines Satzes Schraubenfedern (14'), die zwischen ihm und dem Ventilkörper-Andruckglied (13') angebracht sind, nachgiebig mit diesem verbunden ist.

## Revendications

1. Soupape à porte étanche au vide , non glissante, munie d'un carter de soupape (1) dont l'intérieur peut être maintenu hermétiquement scellé par rapport à l'extérieur, comportant une ouverture (2), formée dans l'une de ses parois latérales (1₁) et un corps de soupape (10) disposé à l'intérieur du carter de soupape (1) et destiné à coopérer de manière étanche avec un siège de soupape (3) formé autour de l'ouverture (2), cette soupape comprenant un mécanisme (20, 35, 36, 40-45) pour actionner le corps de soupape (10) de manière à ouvrir ou fermer de manière étanche l'ouverture (2) formée dans le carter de soupape (1), ce mécanisme (20, 35, 36, 40-45) effectuant deux mouvements successifs, l'un pour déplacer le corps de soupape (10) dans une direction essentiellement perpendiculairement au siège de soupape (3), et l'autre pour déplacer le corps de soupape (10) essentiellement parallèlement au siège de soupape (3) tandis que le corps de soupape (10) est écarté du siège de soupape pendant ce mouvement, caractérisé en ce que :
- le corps de soupape (10) est relié à un dispositif de tige d'actionnement (15) passant à travers un passage (100) formé dans le carter (1),
- le passage (100) du carter (1) est scellé par rapport au dispositif de tige d'actionnement (15) et permet un mouvement de translation et de pivotement de la tige d'actionnement (15) à travers celui-ci,
- le mécanisme d'actionnement (20, 35, 36, 40-45) est monté à l'extérieur du carter de soupape (1), agit sur le dispositif de tige de manoeuvre (15) et se trouve supporté par un dispositif de châssis de support (5, 25) monté sur le carter (1), et
- le dispositif de châssis de support (5, 25) permet un mouvement de translation et de pivotement de la tige d'actionnement (15) actionnée par le mécanisme d'actionnement (20, 35, 36, 40-45).

2. Soupape à porte étanche au vide, non glissante selon la revendication 1 caractérisée en ce que :
- le dispositif de tige d'actionnement (15) s'étend dans une direction essentiellement parallèle au siège de soupape (3),
- une paire de dispositifs de colonnes de support en forme de plaques espacées (5) est fixée à une partie extérieure du carter de soupape (1) et s'étend parallèlement à la direction longitudinale du dispositif de tige d'actionnement (15),
- un dispositif de châssis basculant extérieur (30) est monté à l'extérieur et autour du dispositif de colonnes de support (5) et comprend une paire d'éléments de pieds (30₂) s'étendant parallèlement à la direction longitudinale du dispositif de tige d'actionnement (15), et un élément de bras (30₁) s'étendant perpendiculairement à la direction longitudinale du dispositif de tige d'actionnement (15),
- les éléments de pieds (30₂) sont montés en pivotement sur le dispositif de colonnes de support (5) et sont reliés par l'élément de bras (30₁) à chacune de leurs extrémités,
- un dispositif de châssis basculant intérieur (20) de constitution analogue à celle du châssis basculant extérieur (30) est disposé entre les dispositifs de colonnes de support (5),
- une paire d'axes (25) relient en pivotement les éléments de pieds (30₂, 20₂) des dispositifs de châssis basculants extérieur et intérieur (30, 20) aux dispositifs de colonnes de support (5),
- un dispositif de cylindre à fluide (35, 36) relie les éléments de bras (30₁, 20₁) des châssis basculants extérieur et intérieur (30, 20),
- un dispositif de plaque de support de cylindre à fluide (40) est relié en pivotement aux dispositifs de colonnes de support (5) par des arbres de support de cylindre à fluide (41) disposés perpendiculairement à la direction longitudinale du dispositif de tige d'actionnement (15),
- une paire de dispositifs de cylindres à fluide (42) est fixée à la plaque de support de cylindre à fluide (40) de façon que leurs tiges de piston (43) soient reliées en pivotement à l'élément de bras (20₁) du dispositif de châssis basculant intérieur (20),
- le dispositif de châssis basculant intérieur (20) est monté sur les dispositifs de colonnes de support (5) par les dispositifs d'axes (25) de façon que les éléments de pieds (20₂) puissent être déplacés dans la direction longitudinale du dispositif de tige d'actionnement (15) en plus du mouvement de basculement autour des dispositifs d'axes (25),
- et l'élément de bras (20₁) du dispositif de châssis basculant intérieur (20) est relié au dispositif de tige d'actionnement (15).

3. Soupape à porte étanche au vide, non glissante, selon la revendication 2, caractérisée en ce que, comme élément d'étanchéité, un dispositif de soufflet (38) est monté entre l'élément de bras (20₁) du dispositif de châssis basculant intérieur (20) et la partie (100) du carter de soupape (1) à travers laquelle passe le dispositif de tige d'actionnement (15), les extrémités du dispositif de soufflet (38) étant hermétiquement fixées respectivement à l'élément de bras (20₁) et à la partie (100).

4. Soupape à porte étanche au vide, non glissante, selon la revendication 1, caractérisée en ce que:
- le dispositif de tige d'actionnement (15) s'étend dans une direction essentiellement parallèle au siège de soupape (3),
- un dispositif de châssis basculant (20) est disposé à l'extérieur du carter de soupape (1) et comprend un élément de bras horizontal (20₁) reliant le dispositif de tige d'actionnement (15) à une paire d'éléments de pieds (20₂) suspendus chacun verticalement à une extrémité de l'élément de bras (20₁),
- un dispositif de cylindre à fluide (35, 36) est fixé à l'élément de bras (20₁) du dispositif de châssis basculant (20) de manière à présenter un axe central coïncidant avec l'axe central du dispositif de tige d'actionnement (15) avec sa tige de piston (36) reliée à celui-ci,
- une paire de dispositifs de colonnes (5) est fixée au carter de soupape (1) et s'étend parallèlement à la direction longitudinale du dispositif de tige d'actionnement (15),
- une paire de cylindres à fluide (42) sont fixés chacun au dispositif de colonnes de support (5) et montés de manière à pousser les extrémités respectives de l'élément de bras horizontal (20₁) du dispositif de châssis pivotant (20),
- et des dispositifs d'axes (25) relient en pivotement les parties inférieures des éléments de pieds (20₂) du dispositif de châssis basculant (20) au dispositif de colonnes de support (5).

5. Soupape à porte étanche au vide, sans glissement, selon la revendication 4, caractérisée en ce que le corps de soupape (10) est relié élastiquement à un élément de pression de corps de soupape (13') fixé au centre de l'extrémité inférieure du dispositif de tige d'actionnement (15), et en ce que l'élément de pression de corps de soupape (13') est destiné à s'appuyer contre le corps de soupape (10) essentiellement dans sa partie centrale.

6. Soupape à porte étanche au vide, sans glissement , selon la revendication 5, caractérisée en ce que le corps de soupape (10) est relié élastiquement à l'élément de pression de corps de soupape (13') par un jeu de ressorts hélicoïdaux (14') disposés entre le corps de soupape (10) et l'élément de pression de corps de soupape (13').
